# EUROPEAN PATENT SPECIFICATION

(11) **EP 0 363 358 B1**
(45) Date of publication and mention of the grant of the patent: **21.04.1993**
(21) Application number: 88901480.9
(22) Date of filing: 26.01.1988
(51) Int. Cl.: F16H 1/32

(54) **MOVEMENT TRANSLATION APPARATUS**
BEWEGUNGSÜBERSETZUNGSAPPARAT
DISPOSITIF DE TRANSLATION D'UN MOUVEMENT

(30) Priority: 26.01.1987 SE 8700291; 16.11.1987 SE 8704493
(43) Date of publication of application: 18.04.1990
(73) Proprietor: RENNERFELT, Gustav Bernhard, S-181 47 Lidingö (SE)
(72) Inventor: RENNERFELT, Gustav Bernhard, S-181 47 Lidingö (SE)
(74) Representative: Svanfeldt, Hans-Ake
(86) International application number: PCT/SE88/00028
(87) International publication number: WO 88/05509

(56) References cited:
- FR-A- 893 946
- GB-A- 604 663
- GB-A- 692 868
- SE-A- 204 384
- US-A- 3 037 400
- US-A- 3 546 972
- US-A- 4 696 658

## Description

The present invention relates to a new transmission element, a so-called transmitter or a driving dog, the primary task of which is a to transmit the rotation of an excentrically mounted gear wheel in an excentric gear to the output shaft thereof.

A gear of the kind mentioned has an excentric gear wheel, also known as a satellite wheel or a planet wheel, which is freely mounted on an excentric stub shaft which rotates together with the input shaft of the gear. The excentric gear wheel is in mesh with an outer, stationary, fixed gear wheel and rolls over the internal teeth thereof. The circumference of the excentric gear wheel is somewhat less that that of the fixed gear wheel. As it runs over the internal teeth of the fixed gear wheel, the excentric wheel executes slow rotation about its mounting on the excentric shaft simulataneously as its centre of gravity rotates at a high rotational rate about the input shaft. The Harmonic Drive® gear it not counted as an excentric gear. Neither are planet gears or differential gears where the transmission of rotation takes place with gear wheels to the output shaft. With regard to the properties of these gear types I refer to the description in my WO-A-88/05508.

It is known to use a lever system or two slides, which are mutually displaced 90° (see Swedish patent 342 875) to transmit the slow rotation of the excentric wheel to the output shaft.

These known transmission mechanisms are complicated and voluminous. They also have large backlash when the direction of rotation of the input shaft is reversed. Transmission means of this kind are used in such as ships, where such backlash can be tolerated and where there are no restrictions on space. In connection with ships, it is thus known to utilize pins as translation means, where the pins engage in holes in the excentric gear wheel. Two excentric wheels are used with the excentricity displaced by 180°, so that the gear will not have backlash due to the necessary diameter difference between the pins or rollers and the holes.

This whell-known and often used principle has several serious disadvantages:
a) Very tight tolerances on the ingoing components are required to get the gear to be free from backlash.
b) Each roller must momentarily transmit the major part of the output shaft torque. A large reaction force then loads the output shaft bearing.
c) The structure is complicated. The principle is difficult to use for small servo gears.
d) The gear is noisy.

Another principle for translating the rotation of the excentric gear wheel to the output shaft is to use two universal joints. The disadvantage is that the structure is voluminous axially. Using one universal joint allowing axial movements in each direction is theoretically conceivable.

It is also known to utilize an elastic rubber connection between driving dog pins, which are arranged on the output shaft, and holes which are situated in the excentric wheel.

US-A- 3 546 972 discloses the first part of claim 1 and relates to a planetary reduction gear having an internal ring gear meshing with one or more pinions. The difference between the number of teeth on the ring gear and the number of teeth on each pinion is either 1 or 2. An Oldham type coupling is transmitting the rotation of the pinions to an output shaft of the gear. The Oldham coupling has backlash and a high noise level.

FR-A-893 946 relates to a coupling for transmitting the torque of a motor, suspended in the chassis of a rail vehicle, to the axle of the rail wheels. The coupling includes a plate and a rod member, the plate being attached to the driving shaft and the rod member being journalled in two pivots provided on one side surface of the rail wheel. Two arms, one at each end of the rod, extend from the rod into sliding engagement with the slots of the plate. The coupling will allow for a parallel displacement of the driving shaft relative to the wheel axle and will also allow for an angular displacement of the driving shaft relative to the axis of the wheel axle by tilting the plane of the slots relative to said arms.

The present invention relates to an transmission element of the kind described in the introduction, which does not have the disadvantages of the previously mentioned structures with regard to complexity, large volume, play and high noise level.

The transmitter element proposed in accordance with the invention has a short axial length and provide true angle transmission.

Two embodiments of the invention will now be described in more detail in connection with the accompanying drawings, wherein
Figure 1 is a front view of a known coupling device,
Figure 2 is a longitudinal cross section of the coupling device of Figure 1,
Figure 3 is a longitudinal section, in the left hand part of the figure, of the input part of an excentric gear and in the right hand part of the figure of the output part of the same excentric gear, said output part comprising a transmitter element in accordance with a first embodiment of the invention, and an output shaft, and
Figure 4 is a partial longitudinal section of an alternative embodiment of a transmitter element in accordance with the invention.

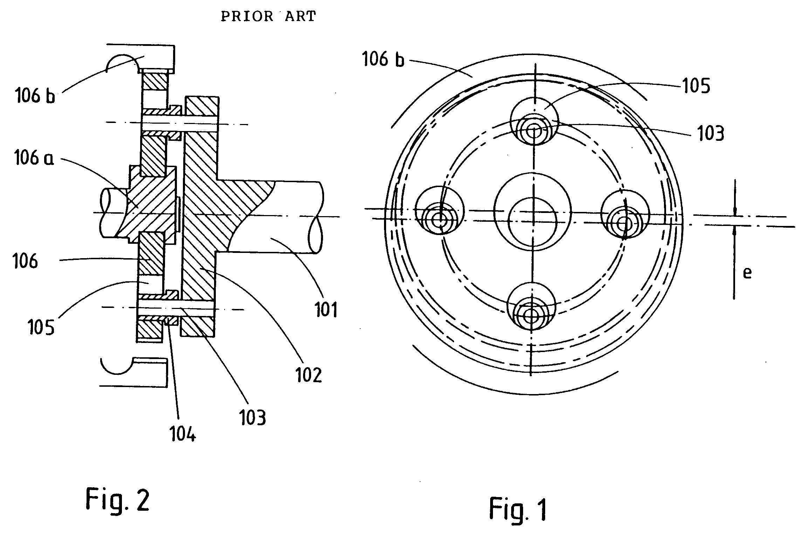

The functional principle of a known transmitter element is illustrated in Figure 1. A disc 102 is fastened to an output shaft 101. The disc 102 has a plurality of axially directed pins 103 on which rollers 104 are journalled. These rollers 104 roll over the surface of round holes 105 in an excentric wheel 106. The excentric wheel 106 has an excentricity e between the input and output shafts. The holes 105 have a diameter exceeding that of the rollers 104 by double the excentricity, i.e. 2e. When the excentric wheel rolls over the internally toothed stationary gear wheel 106b, and thereby executes its planetory movement with the rotational rate of the input shaft 106a, the rollers 104 jorunalled on the pins 103 will each in turn drive the output shaft 101. This transmitter element has the disadvantages described under a) - d) in the introductory part of the description.

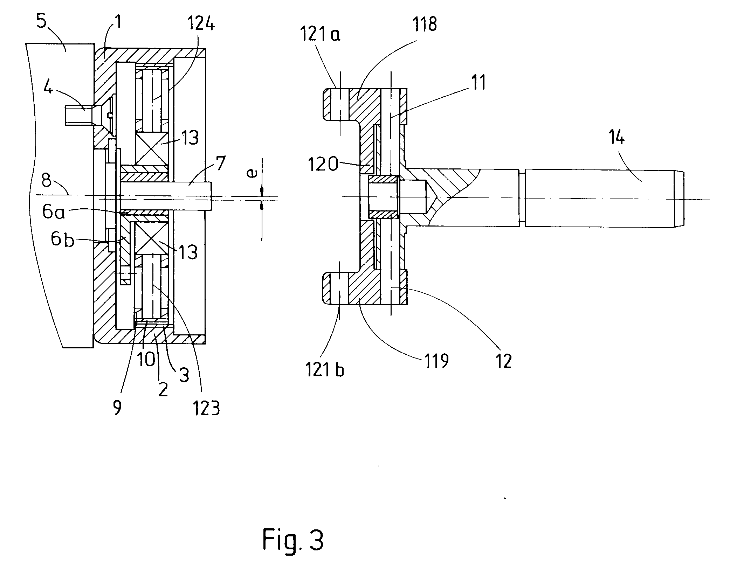

A first embodiment of the driving dog in accordance with the invention will now be described with reference to Figure 3 where a transmitter element 120 is incorporated in an excentric gear, which includeds a cylindrical housing 1 provided with a stationary gear wheel 2, which is integral with the housing 1. The stationary gear wheel 2 has internally cut teeth 3. A plurality of screws 4 are intended for fastening the gear to the end wall of a motor 5. The excentric gear further includes first and second excentric means 6a, 6b mounted on an input shaft 7 the axis of which is denoted 8. The excentricity of the first and second excentric means 6a, 6b is denoted e.

A gear wheel 9 having external teeth 10 is excentrically mounted on the input shaft 7 via a ball bearing 13. Upon rotation of the input shaft 7 the excentrically mounted gear wheel 9 will roll over the internal teeth 3.

The transmitter element comprises a rigid body 120 provided with stiff projections 118, 119 on the rigid body 120. These projections 118, 119 have holes 121a, 121b bored parallel relative holes for pins 11, 12. Pins 11, 12 are provided on the output shaft 14 and accordingly the transmitter element 120 can pivot around pins 11, 12. Pins 123, 124 are urged into the excentric gear wheel 9 using a press fit and are diposed for mounting the transmitter element. This mounting permits both a certain rotational movement of about ±2,6° and a linear movement along the pins 123, 124 of ±0,3 mm which corresponds to the excentric motion of the gear wheel 9 for the gear size described in the Figure.

In spite of the excentric gear wheel having a low rotational rate, its centre of gravity rotates with the high rotational rate of the input shaft. In accordance with the present invention, the driving dog 120 translates the slow rotation of the excentric gear wheel to the output shaft, and encroaches on the axial lenght of the gear substantially only by the thickness of the rigid body 120.

When the transmitter element is momentarily deflected out about the pins 11, 12 the excentric gear wheel 9 will move axially corresponding to the cord height which, with the values given above, will be about 0,005 mm. Since the wheel 9 is slidably mounted, this axial movement is no problem. When the excentric wheel 9 is mounted in ball bearings, the ball bearings should allow this movement. A standard ball bearing normally has an axial play which is at least two or three times greater.

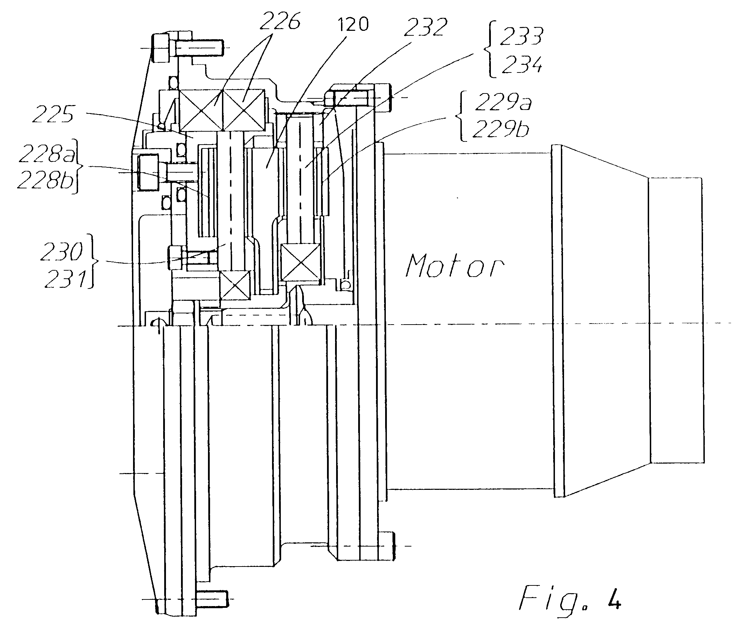

A still further variant of the driving dog is illustrated in Figure 4. The previous variants have had a sliding bearing between the transmitter element and the excentric gear wheel and output shaft. For larger gears, where the greatest possible efficiency is desired, this sliding bearing may be replaced by a ball bearing. In Figure 4 the output shaft has a plate 225 which is mounted in prestressed ball bearings 226. The transmitter element is mounted on this plate 225 with the aid of ball bushes 228a, 228b on the pins 230, 231 which permits the driving dog 10 to pivot a small angle, but does not allow any translatory movement. The excentric gear wheel 232 has two pressed-in pins 233, 234 which are parallel to said pins. The ball bushing 229a, 229b pressed into the driwing dog 10 are journalled on the pins 233, 234 and allow the driving dog 10 to pivot a small angle as well as allowing the excentric gear wheel 232 to move translatorily in the direction of said pins 233, 234.

In the embodiments described in Figures 3 and 4 the transmitter element is subjected to torque on loading (braking) the output shaft. The transmitter element must thus be dimensioned so that a sufficiently high torsional stiffness is obtained about the lugs or pins on the output shaft.

The ideal coupling should have the following properties:
a) It is insensitive to static and dynamic translatory positional errors between the shafts in all three coordinate directions.
b) It is insensitive to static and dynamic angular errors between the shafts in the coordinate directions as right angles to the axial direction of the rotation which is to be translated.
c) It provides true angular translation.
d) It is torsionally stiff.
e) It comprises two parts. The parts should be able to be assembled one each shaft end individually. This facilitates assembly and simplifies service exchanges.
f) It should have small volume. In particular, its axial length should be small.
g) It should have low cost.

The embodiment described above can be modified in many ways and varied within the scope of the inventive concept.

This novel type of transmitter element has several advantages over previously known and above-mentioned types, namely:
a) True angle translation.
b) Torque is taken from the excentric gear wheel at a large radius, with the reaction forces of the load torque being distributed equally on diametrically opposed sides of the centre of the output shaft, resulting in that the forces balance each other and do not load the mounting of the output shaft. (The frictional force between the transmitter element and the excentric gear wheel loads this mounting however).
c) The gear is given a very short structural length.
d) A low price, no tight tolerances. The holes in the transmitter element and excentric gear wheel for the pins are broached with conventional tools. No part matching work is required during assembly.

## Claims

1. Transmitter element for use in an excentric gear which comprises:
- an input shaft (7),
- a gear (9; 232) excentrically mounted on the input shaft and provided with external teeth ,
- a gear housing (1) provided with internal teeth (3) over which the excentrically mounted gear (9) is rolling,
- an output shaft (14) concentric with the input shaft (7),
**characterized in that** said transmitter element comprises:
- a rigid body (120) with a first pair of holes and a second pair of holes (121a, 121b),
- first pins (11, 12) provided on the output shaft (14) and cooperating with the first pair of holes to form a first bushing for pivoting the rigid body,
- second pins (123, 124; 233, 234) provided on the excentrically mounted gear wheel (9) and cooperating with the second pair of holes (121a, 121b) to form a second bushing allowing for a pivotal as well as translatory movement of the rigid body relative to the excentrically mounted gear wheel (9),
- whereby slow rotation of the excentrically mounted gear wheel (9) around its center of gravity is transmitted to the output shaft.

2. Transmitter element in accordance with claim 1, **characterized in that** the first pins (11, 12) are journalled in ball bushes (228a, 228b) and that the second pins (233, 234) are journalled in ball bushings (229a, 229b).

3. Transmitter element in accordance with claim 1, **characterized in that** said second pair of holes are provided in two lugs (118, 229) extending from the rigid body (120).

## Patentansprüche

1. Übertragungselement zur Benutzung in einem exzentrischen Getriebe mit
- einer Eingangswelle (7),
- einem Zahnrad (9; 232), das exzentrisch auf der Eingangswelle angeordnet und mit einer Außenverzahnung versehen ist,
- einem Getriebegehäuse (1), das mit einer Innenverzahnung (3) versehen ist, auf der das exzentrisch angeordnete Zahnrad (9) abrollt,
- einer konzentrisch zu der Eingangswelle (7) angeordneten Ausgangswelle (14),
dadurch gekennzeichnet, daß das Übertragungselement folgende Merkmale aufweist:
- einen festen Körper (120), in dem ein erstes Paar Durchbrechungen und ein zweites Paar Durchbrechungen (121a, 121b) vorgesehen sind,
- erste Bolzen (11, 12), die auf der Ausgangswelle (14) vorgesehen sind und mit dem ersten Paar Durchbrechungen zur Bildung eines Kipplagers für den festen Körper zusammenarbeiten,
- zweite Bolzen (123, 124; 233, 234), die auf dem exzentrisch angeordneten Zahnrad (9) vorgesehen sind und mit dem zweiten Paar Durchbrechungen (121a, 121b) zur Bildung eines zweiten Kipplagers, welches auch eine translatorische Bewegung des festen Körpers relativ zu dem exzentrisch angeordneten Zahnrad (9) zuläßt, zusammenarbeiten,
- wodurch die langsame Rotation des exzentrisch angeordneten Zahnrades (9) um seinen Schwerpunkt auf die Ausgangswelle übertragen wird.

2. Übertragungselement nach Anspruch 1, dadurch gekennzeichnet, daß die ersten Bolzen (11, 12) in Kugellagern (228a, 228b) und daß die zweiten Bolzen (233, 234) in Kugellagern (229a, 229b) gelagert sind.

3. Übertragungselement nach Anspruch 1, dadurch gekennzeichnet, daß das zweite Paar Durchbrechungen in zwei von dem festen Körper (120) abstehenden Vorsprüngen (118, 229) vorgesehen ist.

## Revendications

1. Élément de transmission destiné à être utilisé dans un mécanisme à excentrique, qui comprend :
- un arbre d'entrée (7),
- une roue dentée (9;232) montée de façon excentrique et comportant des dents extérieures,
- un logement (1) pour la roue dentée, équipé de dents internes (3) et sur lequel roule la roue dentée (9) montée de façon excentrique,
- un arbre de sortie (14) concentrique à l'arbre d'entrée (7),
caractérisé en ce que ledit élément de transmission comprend :
- un corps rigide (120) possédant un premier couple de trous et un second couple de trous (121a,121b),
- des premières broches (11,12) prévues sur l'arbre extérieur (14) et coopérant avec le premier couple de trous pour former un premier manchon servant à faire pivoter le corps rigide,
- des secondes broches (123,124; 233,234) prévues sur la roue dentée montée de façon excentrique et coopérant avec le second couple de trous (121a,121b) pour former un second manchon permettant un pivotement ainsi qu'un mouvement de translation du corps rigide par rapport à la roue dentée (9) montée de façon excentrique,
- une légère rotation de la roue dentée (9) montée de façon excentrique autour de son centre de gravité étant transmise à l'arbre de sortie.

2. Élément de transmission selon la revendication 1, caractérisé en ce que les premières broches (11,12) sont tourillonnées dans des manchons à billes (228a, 228b) et que les secondes broches (233,234) sont tourillonnées dans des coussinets à billes (229a,229b).

3. Élément de transmission selon la revendication 1, caractérisé en ce que le second couple de trous est prévu dans deux pattes (118,229) qui s'étendent à partir du corps rigide (120).
